# EUROPEAN PATENT SPECIFICATION

(11) **EP 2 114 692 B1**
(45) Date of publication and mention of the grant of the patent: **27.04.2011**
(21) Application number: 06835779.7
(22) Date of filing: 29.12.2006
(51) Int. Cl.: B60B 1/04, B60B 21/06

(54) **BICYCLE WHEEL WITH RIM FOR A TUBELESS TYRE**
FAHRRADRAD MIT FELGE FÜR EINEN SCHLAUCHLOSEN REIFEN
ROUE DE BICYCLETTE AVEC JANTE POUR UN PNEU À CHAMBRE INCORPORÉE

(43) Date of publication of application: 11.11.2009
(73) Proprietor: Rodi - Metalúrgicas do Eixo, S.A., 3800 Aveiro (PT)
(72) Inventor: AFONSO FELGAR, Claudia Patricia, 3800 AVEIRO (PT); DO COUTO GANDARINHO, Alexandre, 3830-661 Gafanha da Nazaré (PT)
(74) Representative: Pereira da Cruz, Jorge Afonso
(86) International application number: PCT/PT2006/000031
(87) International publication number: WO 2008/082319

(56) References cited:
- US-A1- 2003 047 986
- US-A1- 2003 209 936
- US-A1- 2004 251 734
- US-B1- 6 736 462

## Description

### Scope of the invention

The present invention concerns a bicycle wheel with a rim for a tubeless tyre. The aluminium rim's profile configures an inner tube on which are introduced elements that shall support the spokes and permit their tightening between the wheel's hub and the said rim.

### Prior art

Different bicycle wheels with rims, suitable to support tubeless tyres, are known. As it is common knowledge, a tubeless tyre requires a rim with no holes in the area receiving the tyre or, if any, they must be suitably insulated such that the tyre is air-tight inside. Therefor, the rims profile exhibit a characteristic configuration. Basically, the rim's profile is provided with a tube whereon are made the holes to fix the spokes. Such tube is peripherally developed next to the tyre supporting area. Alternatively, the rim of the prior art may not present a chamber suitable for the spokes holes but rather a sealing system for the holes that shall receive the spokes heads in the chamber that shall receive the tubeless tyre.

Among the documents of the prior art the following must be mentioned: US 6,155,651, US 2004/0004391, US 2003/0025383, FR 2,829,969, EP 1,260,382, EP 1,375,195 **and** US 2004/251734.

Patent US 6,155,651 concerns a bicycle wheel for a tubeless tyre of the type WO, the rim of this wheel being built such that it is able to be air-tight, reduce the wheel's weight and provide an easy way to fix a tyre. Particularly, a sealing material located inside a groove may have a reduced weight and the fixing of a tyre bead in the rim is readily done by placing the tyre bead inside the groove. This provides a system wherein a rim with a diaphragm is provided in the outer side of the rim, a hole that is formed in the diaphragm and which is appropriate for the spokes fixing head to pass through, which hole ? is made air-tight by means of a sealing material presented under the form of a metallic stripe and, when a tubeless tyre is filled with air, a soft foam is also to be bound to the upper surface of the sealing material, such that a portion of the tyre bead is easily placed on a portion whereon the tyre bead shall be laid, such that even a very thin portion of the tyre bead is easily sealed, following which the form of the laying portion of the tyre bead between a portion of the rim's flange and a bent portion of the rim presents a curved form to increase the sealing area, a valve is pressed against the diaphragm through a gasket and made air-tight, a hole for the assembling of the spokes is drilled in a portion of thick wall of the surface of the rim's body, and one spoke's end and the crown of a spoke's fixing head are received in a hollow portion.

Patent US 2004/0004391 concerns a rim to fit tubeless tyres, particularly for bicycles, motorcycles and motorized bicycles, consisting in a profiled element that is bent in a circular form and which is symmetrical in respect of a plan of centre lines, the said profiled element forming an outer annular valve and an inner annular laying valve which are divided by an annular partition provided with slots and arranged respective to the heads connected to the spokes of the said rim, a tyre of the tubeless kind being connected to the said outer annular laying valve, such that it forms a pressure tube. The rim includes some plugging elements which fit in the said slots, so that they hermetically separate the said outer annular laying valve of the said inner annular laying valve.

Patent US 2003/0025383 concerns a rim structure for a bicycle wheel which includes, in the periphery thereof, an annular channel intended for receiving a tyre, the said channel being outlined by an upper bridge devoid of openings, except the opening for the valve, and two side flanges, such flanges being provided with ends suitable to engage the tyre. The upper bridge has a rim central cavity, narrow and withdrawn, outlined by a base and by two side walls, the rim's cavity being outlined by two laying valves for the tyre bead which are slant between the rim's cavity and the flanges. The invention does also concern a wheel having such a rim and a wheel equipped with a tyre fitted without a tube and having such rim.

Patent FR 2,829,969 concerns a bicycle wheel expected to be assembled without a tube. The upper bridge of the wheel alloys has a central rib that laterally defines two slots wherein the tyre beads fit and are retained. The height of the slots is lower than the width thereof at the level of the rib's upper part, the height of the tyre beads exceeding the thickness thereof, this height being lower than the slots height and higher than the width thereof.

Patent EP 1,260,382 concerns a rim for a bicycle wheel that includes side portions with an outer portion that extends between the side portions, so that it forms a pair of outer corners, and a portion for the fixing of the spokes. The outer portion includes a pair of ribs spaced apart from the outer corners. Preferably, the ribs divide a pair of slant surfaces. The side portions do preferably include a pair of braking surfaces rectified with a pair of oblique surfaces that extend between the braking surfaces and a pair of outer side surfaces. A bicycle tubeless tyre is fitted on the rim including a portion of tread, a pair of side walls and a pair of tyre beads. Each of the tyre beads has an inner laying surface supported on one of the ribs. Preferably, each of the tyre beads has a reinforcing element with a central axis. Each of the ribs is preferably located between one of the central axis and an inner edge of one of the inner laying surfaces.

Patent EP 1,375,195 concerns a set of rim and spokes including an annular rim and a plurality of spokes. Each of the spokes is provided with a sealing structure that enables a tubeless tyre to be used with the rim. The rim has preferably an annular groove with a plurality of openings to fix the spokes. Each of the spokes has an outer end portion coupled to one of the openings to fix the spokes. Each of the spokes outer end portions includes a supporting element and a resilient sealing element that forms the sealing structure for the spoke. The supporting elements and the sealing elements are arranged and configured such that the supporting elements shall contact the spokes fixing portion in a selective manner, so that it prevents the total compression of the sealing elements when a radial force is applied on the supporting elements. The supporting elements may be separated from the spokes or be fully formed with the spokes.

The closest prior art document US 2004/251734 refers to a wheel which includes a wheel rim having a number of orifices defined by one or more flanges for threading with spokes. A number of latches are attached to the spokes and each includes a base having a shape for engaging through the orifices of the wheel rim. Each of the latches include a catch disposed on the base, and also engageable through the orifices of the wheel rim, and having one or more tongues in the base. The catches are engageable into the orifices of the wheel rim.

### Summary of the invention

In the world of cycling, either in competition or leisure, both in road bicycles and mountain bicycles, the search for components wherein the weight may be as low as possible is well known. One of the bicycle components that may contribute the most for this reduction is doubtlessly the tyre and the respective rim on which it is fitted. There are, therefore, several solutions for bicycle wheels wherein the tyres are not provided with air-tubes. Therefor, and as it was mentioned in the preceding chapter, the rims present a special configuration, which, nevertheless, may add some additional weight.

Furthermore, it is general knowledge that tubeless tyres are those which:
- show less rolling resistance;
- have a lower weight among all kinds of tyres;
- permit a higher inflating pressure;
- in the event of a swift deflation, do yet grant drivers greater stability and security.

These and other advantages force manufacturers to constantly search for solutions that may provide satisfaction to clients who are increasingly demanding.

Within this line of thought, the applicant conceived an innovating solution the main object of which consists in a rim suitable to fix tubeless tyres, i.e., a rim provided with a chamber wherein special holes are drilled for the introduction of the wheel spokes fixing elements.

Another object of the invention is the lightness of the rim, a factor much appreciated by the users of mountain or road bicycles.

A further object of the inventions is yet the easy way of placing the spokes in the bicycle wheel provided with a rim suitable to receive a tubeless tyre.

Other objects and advantages shall become apparent along this description.

### Brief description of the drawings

The following description is based on the attached drawings of some preferred embodiments which are presented herein with no limiting character. In the drawings:

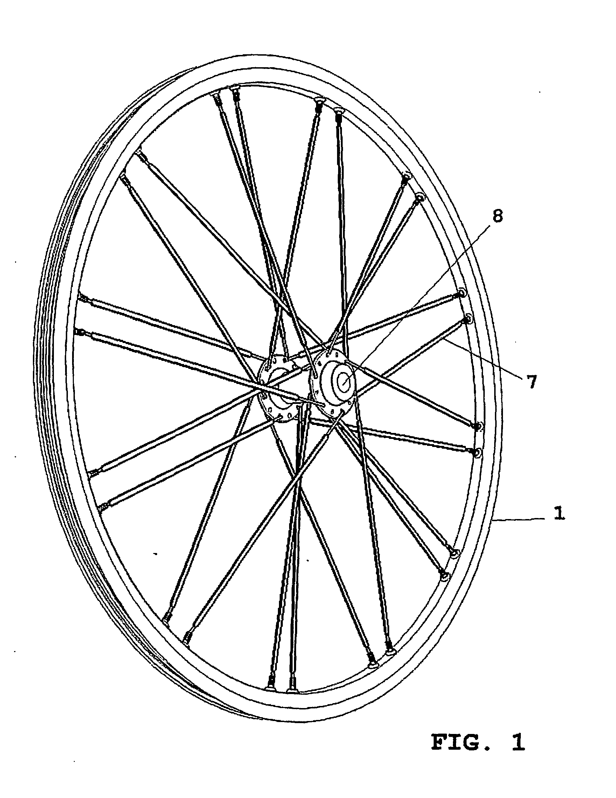

Figure 1 depicts a bicycle's wheel rim according to the invention;

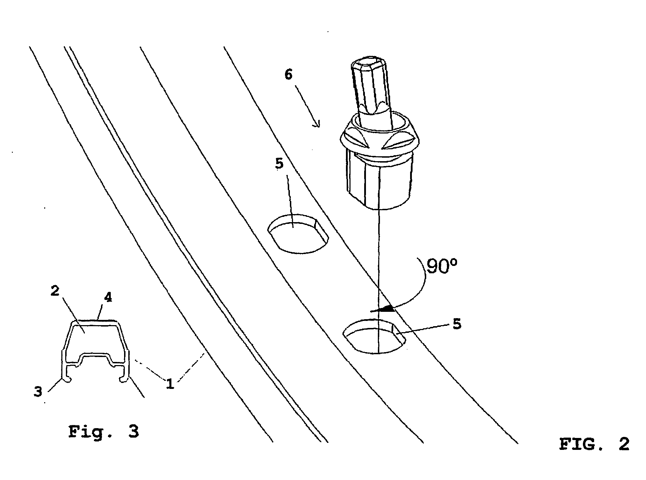

Figure 2 depicts an exploded view of the rim and of the element to fix the spokes;
Figure 3 depicts a cross-section view of the rim's profile;

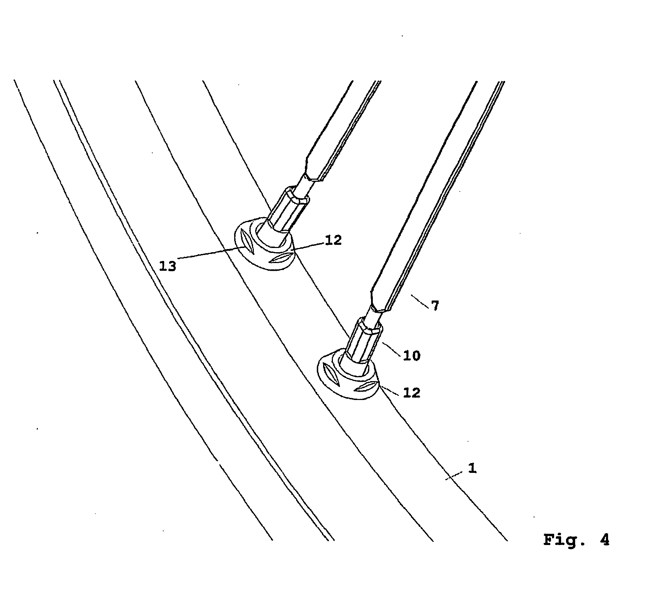

Figure 4 depicts another view of the rim with the assembled spokes; and
Figure 5 depicts an exploded view of the element to fix the rays.

### Detailed description of the invention

As it may be observed in the attached figures, the rim 1 for a bicycle wheel for tubeless tyres is shown with a profile having a "U" configuration with a transversal partition wall provided with a central channel between the legs 3 of the "U", such wall determining a chamber 2. The tyre beads contact and are fixed onto the outward-turned edges of the "U" legs 3, such legs configuring, in the outer side, a braking flat zone against which the brake chocks shall act.

The said chamber 2 is perforated along the wall or bore 4 of the "U". Perforations 5, to receive the fixing elements 6 for the spokes 7, have a substantially rectangular configuration, the minor sides of which being rounded, and the number of which is in accordance with the number of spokes which are intended to attach rim 1 to the wheel's hub 8.

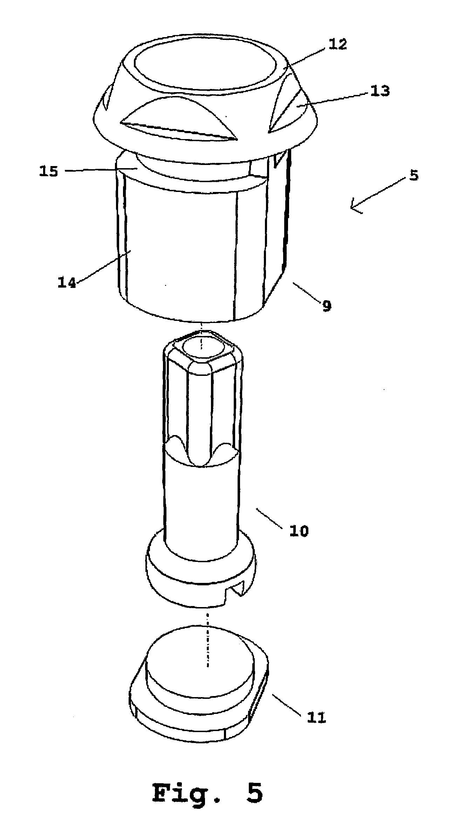

Fixing elements 6 are formed by one heads-holder 9, one head 10 and one element 11 sealing-off dirt and moist. As it may be observed in Figure 5, the heads-holder 9 is provided with a hole drilled through and through to introduce head 10 to fix spoke 7 which, on its turn, fix the said spoke 7. Heads-holder 9 is provided with a base 14 which transversal section has a form that matches the form of perforation 5 and on the upper part of which is opened a slot 15. The heads-holder 9 is also provided with an upper part 12.

The assembling sequence is as follows: First, head 10 is assembled in the heads-holder 9 and the sealing element is put in place; next, heads-holder 10 is fitted in perforation 5 and turned 90° to effect the fixing thereof to rim 1 on the wall 4 of chamber 2; finally, the spoke is introduced therein and is conveniently tightened.

Tightening of the spoke 7, between rim 1 and hub 8, is sufficient to guarantee the fixing of the heads-holder 9. The said tightening is performed by acting on head 9. The upper part 12 of the heads-holder 9 is provided with facets 13 proper to cooperate with appropriate keys to promote the fixing thereof by means of a 90° rotation in perforation 5.

The sealing element 11 has a configuration that is adapted to the hole of the heads-holder 9 and is assembled after the introduction of head 10 in heads-holder 9 and immediately before the introduction of the element 6 to fix spoke 7 in perforation 5 of chamber 2 of the said rim 1.

## Claims

1. Bicycle wheel with rim (1) for a tubeless tyre, the said rim (1) having a profile with a "U" configuration with a transversal partitioning wall provided with a central channel between the "U" legs (3), such wall determining a chamber (2) and on which are practiced perforations (5) according to the number of rays (7) with which the said rim (1) is to be attached to the wheel's hub (8), which shall receive fixing elements (6) to fix the said spokes (7), such fixing elements are initially fitted in the perforations and later on turned 90° to promote the fixation thereof on the walls of chamber (2); **characterized in that**
the fixing element is formed by a heads-holder (9), a fixing head (10) and a sealing element (11) sealing-off dirt and moist, the said heads-holder (9) having a hole drilled through and through for the introduction of the fixing head (10) which, on its turn, fixes the said spoke (7);
said heads-holder (9) having a base (14) which transversal section has a form that matches the form of the perforation (5) and on the upper part of which is formed a slot (15) which shall promote, when the fixing element (6) is rotated, the fixing thereof on the wall (4) of the chamber (2), and the sealing element (11) having a configuration which is adapted to the hole of the heads-holder (9).

2. Bicycle wheel with rim for a tubeless tyre according to the preceding claim, **characterised in that** perforations (5), proper to receive fixing elements (6) for spokes (7), have a substantially rectangular configuration, the minor sides of which being rounded.

3. Bicycle wheel with rim for a tubeless tyre according to the preceding claims, **characterised in that** the tightening of spoke (7), between rim (1) and hub (8) is sufficient to guarantee the fixing of heads-holder (9).

4. Bicycle wheel with rim for a tubeless tyre according to the preceding claim, **characterised in that** the upper part (12) of heads-holder (9) is provided with facets (13) proper to cooperate with an appropriate tool which shall promote the tightening of spoke (7).

## Patentansprüche

1. Fahrrad-Rad mit einer Felge (1) für einen schlauchlosen Reifen, wo die Felge (1) einem Profil mit einem "U"-Konfiguration hat, mit einem transversalen Trennwand, die einem zentralen Kanal zwischen dem "U" Beine (3) hat; diese Wand bestimmt eine Kammer (2) wo Perforationen (5) praktiziert sind, nach der Anzahl der Strahlen (7), mit dem diese Felge (1) mit befestigt das Rad der Nabe(8) ist, die Befestigungselemente (6) erhalt, damit es der Speichen (7) befestigt kann; diese Befestigungselemente sind zuerst in die Perforationen festgelegt und später um 90 º nach Fixierung an den Wänden der Kammer (2) zu fördern, **dadurch gekennzeichnet, dass** das Befestigungselement ist aus einem Kopfhalter (9), eine Fixierung Kopf (10) und einem Dichtelement (11) gebildet, damit es Schmutz und Feuchtigkeit abschottet, die Kopfhalter (9) haben einem Loch durch und durch für die Einführung der Festsetzung Kopf (10) gebohrt, die, als Funktion, behebt die Radspeiche (7);
Der Kopfhalter (9) mit einer Basis (14), deren Transversalschnitt eine Form hat, die der Form der Perforation (5) abgleicht und auf deren oberen Teil ein Schlitz (15) ausformt und das übereinstimmt werden, wenn die Befestigungselement (6) gedreht wird, deren Befestigung an der Wand (4) der Kammer (2) und das Dichtelement (11)mit einer Konfiguration, die auf die Öffnung des Kopfhalter (9) angepasst ist.

2. Fahrrad-Rad mit einer Felge eines schlauchlosen Reifens nach dem vorhergehende Anspruch, **dadurch gekennzeichnet, dass** die Perforationen (5), richtige um Befestigungselemente (6) für Speichen (7) zu erhalten, einen im wesentlichen rechteckigen Konfiguration haben, wo die kleinere Seiten abgerundet sind.

3. Fahrrad-Rad mit einer Felge eines schlauchlosen Reifens nach dem vorhergehenden Ansprüche, **dadurch gekennzeichnet, dass** die Verschärfung der Speiche (7), zwischen die Felge (1) und die Nabe (8) ausreichend ist, um die Feststellung von die Kopfhalter (9) zu gewährleisten.

4. Fahrrad-Rad mit einer Felge eines schlauchlosen Reifens nach dem vorhergehende Anspruch, **dadurch gekennzeichnet, dass** der obere Teil (12) des Kopfhalter (9) ist mit Facetten (13) versehen, richtige um mit einem geeigneten Werkzeug für das Verschärfung der Speiche (7) zu arbeiten.

## Revendications

1. Une roue de bicyclette avec jante (1) pour un pneu sans chambre à air, ladite jante (1) présentant un profil avec une configuration en U avec une paroi de séparation transversale dotée d'un canal central entre les jambes (3) de l'U, ladite paroi déterminant une chambre (2) et ayant des perforations (5) selon le nombre de rayons (7) qui vont relier ladite jante (1) au moyeu (8) de la roue, lesquelles vont recevoir des éléments de fixation (6) pour fixer lesdits rayons (7), **caractérisée en ce que** lesdits éléments de fixation sont insérés initialement dans les perforations et ensuite tournés 90° afin d'assurer leur fixation dans les parois de la chambre (2);
l'élément de fixation est formé d'un porte-têtes (9), d'une tête de fixation (10) et d'un élément d'étanchéité (11) pour assurer une étanchéité à la saleté et à l'humidité, ledit porte-têtes (9) étant percé d'un trou qui le traverse d'un côté à l'autre pour l'introduction de la tête de fixation (10) qui, à son tour, fixe ledit rayon (7) ;
ledit porte-têtes (9) ayant une base (14) dont la coupe transversale a une forme qui correspond à la forme de la perforation (5) et dont la partie supérieure est dotée d'une rainure (15) qui assurera, lors de la rotation de l'élément de fixation (6), sa fixation dans la paroi (4) de la chambre (2), et l'élément d'étanchéité (11) ayant une configuration adaptée au trou du porte-têtes (9).

2. Une roue de bicyclette avec jante pour un pneu sans chambre à air selon la revendication précédente, **caractérisée en ce que** les perforations (5) aptes à recevoir les éléments de fixation (6) des rayons (7) ont une configuration substantiellement rectangulaire, dont les côtés inférieurs sont arrondis.

3. Une roue de bicyclette avec jante pour un pneu sans chambre à air selon les revendications précédentes, **caractérisée en ce que** le resserrement du rayon (7) entre la jante (1) et le moyeu (8) est suffisant pour assurer la fixation du porte-têtes (9).

4. Une roue de bicyclette avec jante pour un pneu sans chambre à air selon la revendication précédente, **caractérisée en ce que** la partie supérieure (12) du porte-têtes (9) est dotée de facettes (13) aptes à coopérer avec un outil approprié qui assurera le resserrement du rayon (7).
